# FASCICULE DE BREVET EUROPEEN

(11) **EP 2 519 403 B1**
(45) Date de publication et mention de la délivrance du brevet: **09.04.2014**
(21) Numéro de dépôt: 10810783.0
(22) Date de dépôt: 22.12.2010
(51) Int. Cl.: B29D 30/28

(54) **PROCEDE ET DISPOSITIF DE MISE EN JOINT D'UNE COUCHE DE MATIERE POUR LA REALISATION D'UNE EBAUCHE CRUE DE PNEUMATIQUE**
VERFAHREN UND VORRICHTUNG ZUR ZUSAMMENFÜGUNG EINER MATERIALSCHICHT ZUR HERSTELLUNG EINES REIFENROHLINGS
METHOD AND APPARATUS FOR JOINING A LAYER OF MATERIAL IN ORDER TO PRODUCE A RAW TYRE BLANK

(30) Priorité: 29.12.2009 FR 0959638
(43) Date de publication de la demande: 07.11.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: FRECON, Jérôme, F-63360 Lussat (FR); CHARLES, Alain, F-63870 Orcines (FR); CANADELL, Fabrice, F-97600 Mamoudzou (FR)
(74) Mandataire: Lasson, Cédric Y. M.
(86) Numéro de dépôt international: PCT/FR2010/052881
(87) Numéro de publication internationale: WO 2011/080471

(56) Documents cités:
- WO-A1-03/097337
- WO-A1-2007/080640
- DE-B- 1 213 605
- JP-A- 6 286 018
- JP-A- 2004 249 512
- US-A1- 2006 048 884

## Description

La présente invention concerne le domaine de la fabrication de pneumatiques. Plus précisément, l'invention concerne le rouletage ou encore la mise en joint d'une couche externe de matière sur une couche de base.

Le procédé de fabrication d'un pneumatique comprend des étapes d'assemblage de couches, au cours desquelles on empile par enroulement un certain nombre de couches de produits de renfort et de profilés caoutchoutiques sur un tambour de forme généralement cylindrique, les couches correspondant à différents types de gommes. L'assemblage des couches est par la suite suivi d'une étape de conformation, de façon à obtenir une ébauche crue de pneumatique qui sera par la suite vulcanisée, pour former le pneumatique.

Les demandes de brevet WO 2007/080640 A1 et JP 06 28 6018 A décrivent un procédé et un dispositif d'assemblage de couches sur un tambour.

Au cours de l'assemblage des différentes couches, il est important de faire adhérer les couches les unes aux autres en mettant à profit le collant naturel du caoutchouc non vulcanisé et en évitant toute inclusion d'air entre les couches, ce qui conduirait à la formation de défauts lors de la vulcanisation. A cet effet, on procède à un rouletage des couches, c'est-à-dire que l'application d'une nouvelle couche est suivie d'une étape de mise en joint de la couche contre la couche précédente.

Généralement, le rouletage est mis en oeuvre au moyen d'un galet actionné par un vérin pneumatique, le galet venant en contact avec la couche qui vient d'être appliquée et exerçant une pression mécanique sur cette couche pendant que cette dernière est entraînée en rotation. Pendant la rotation de la couche, le galet est en outre déplacé dans la direction axiale du tambour, de façon que la pression soit appliquée sur toute la surface de la couche et que l'air soit drainé ves une des extrémités axiales de la couche de produit.

Il se trouve que le procédé de rouletage prend un certain temps dans le procédé de fabrication du pneumatique, notamment dans le cas des pneumatiques de grandes dimensions, par exemple du type génie-civil. En effet, après chaque application d'une couche, il est nécessaire de faire tourner le tambour plusieurs fois pour s'assurer que le galet a pu balayer toute la surface de la couche.

La présente invention a notamment pour but de diminuer le temps de réalisation d'un pneumatique.

A cet effet, l'invention a notamment pour objet un procédé de mise en joint d'une couche externe de matière, de préférence de produit caoutchoutique, sur une couche de base pour la réalisation d'une ébauche crue de pneumatique, l'ébauche présentant un axe de révolution, le procédé comportant une étape d'application de la couche externe sur la couche de base, suivie d'une étape de mise en joint de la couche externe contre la couche de base, **caractérisé en ce que** l'étape de mise en joint se fait au moyen d'un élément de plaquage entourant la couche externe et élastiquement déformable entre une configuration dite agrandie et une configuration dite de plaquage de la couche externe, dans laquelle l'élément de plaquage exerce une pression radiale sur la couche externe, l'étape de mise en joint comprenant les étapes suivantes :
- passage de l'élément de plaquage de la configuration agrandie à la configuration de plaquage de la couche,
- déplacement, suivant la direction axiale de l'ébauche, de l'élément de plaquage en configuration de plaquage.

Ainsi, on propose d'utiliser un élément de plaquage élastique disposé tout autour de la couche externe de manière qu'il puisse exercer une pression radiale de façon simultanée tout autour de la couche. Il en résulte que l'élément de plaquage peut balayer toute la surface de la couche externe de façon très rapide, par une simple translation axiale de l'élément de plaquage, sans avoir forcément besoin d'entraîner la couche externe en rotation.

Aussi, alors qu'il était nécessaire auparavant d'effectuer plusieurs rotations du tambour pour procéder à la mise en joint de la totalité de la surface de la couche externe, une seule translation peut être suffisante grâce au procédé de mise en joint présenté ci-dessus, d'où un gain de temps. On comprend que le gain de temps est d'autant plus important que le pneumatique est de diamètre important. On notera que le procédé permet en outre d'occuper les opérateurs de façon plus optimale, puisqu'il n'est pas nécessaire qu'ils attendent pendant le rouletage des couches, cette étape étant désormais particulièrement rapide.

On notera que le procédé proposé ci-dessus peut être mis en oeuvre à différentes étapes du procédé de fabrication du pneumatique, notamment lors de l'application de couches à plat sur le tambour ou encore lors de l'application de couches après la conformation de l'ébauche de pneumatique.

On notera que la « couche externe » est généralement une couche de gomme de nature caoutchoutique pouvant désigner un profilé ou une nappe de renfort. Par ailleurs, on entend par « couche de base » tout support sur lequel la couche externe peut être appliquée. La couche de base peut par exemple désigner une couche de gomme, plusieurs couches de gommes juxtaposées ou en chevauchement, ou une ou plusieurs nappe de renfort. On entend par nappe de renfort une nappe constituée de tronçons de fils enrobés dans du caoutchouc, parallèles entre eux et formant un angle donné avec la direction circonférentielle du pneumatique. Le procédé décrit ci-dessus peut en outre comporter l'une ou plusieurs des caractéristiques suivantes, prises seules ou en combinaison.

L'élément de plaquage délimite un contour fermé de périmètre donné, de préférence sensiblement circulaire de diamètre donné, et est configuré de telle sorte que le périmètre de son contour, lorsqu'il est en configuration de repos, est inférieur au périmètre extérieur de la couche de base, de manière que l'élément de plaquage en configuration de plaquage exerce une force de compression de la couche externe contre la couche de base. Ainsi, lorsque l'élément de plaquage est en configuration de plaquage, il subit une force de rappel qui tend à lui faire reprendre sa configuration de repos, de diamètre plus petit, provoquant ainsi une pression centripète tout autour de la couche externe. On notera que la configuration de repos de l'élément de plaquage correspond à la configuration dans lequel l'énergie de rappel élastique de l'élément de plaquage est nulle. Le diamètre de l'élément de plaquage en configuration de repos est inférieur au diamètre en configuration de plaquage (diamètre correspondant sensiblement au diamètre extérieur de la couche externe), lui-même inférieur au diamètre en configuration agrandie.

Le procédé comprend une étape de passage de l'élément de plaquage de la configuration de plaquage à la configuration agrandie, sous l'action de moyens de déformation de l'élément de plaquage, comprenant des vérins pneumatiques. Ainsi, avant la mise en joint de la couche externe, les moyens de déformation permettent d'étirer l'élément de plaquage pour le positionner autour de la couche externe.

Lorsque l'élément de plaquage est en configuration de plaquage, les moyens de déformation sont commandés de façon à augmenter ou diminuer la pression exercée sur la couche externe. On peut ainsi ajuster la pression exercée par l'élément de plaquage, par exemple en fonction du diamètre de la couche de base. On notera que ce mode de réalisation en particulier permet d'utiliser un même élément de plaquage pour appliquer différents types de couches, notamment des couches ayant des diamètres différents. Toutefois, même sans commander les moyens de déformation pour augmenter ou diminuer la pression, on peut utiliser un même élément de plaquage pour appliquer différents types de couches.

Pour améliorer le temps de cycle de l'étape de mise en joint, on peut avantageusement utiliser deux éléments de plaquage, chacun étant déplacé suivant la direction axiale dans des directions opposées à partir du plan équatorial de l'ébauche de pneumatique. Outre le fait que l'on diminue encore le temps du procédé de mise en joint, on assure ainsi une mise en joint symétrique des couches du pneumatique, ce qui améliore les qualités du pneumatique et permet de s'affranchir des problèmes liés à la mise en compression axiale de l'ébauche de pneumatique.

L'invention a par ailleurs pour objet un procédé de fabrication d'une ébauche crue de pneumatique comprenant un procédé de mise en joint tel que décrit précédemment.

L'invention a également pour objet un dispositif de mise en joint d'une couche externe de matière sur une couche de base pour la réalisation d'une ébauche crue de pneumatique, l'ébauche présentant un axe de révolution, caractérisé en ce que le dispositif comprend :
- un élément de plaquage configuré pour entourer la couche externe lorsqu'elle est appliquée sur la couche de base, délimitant un contour fermé ayant un périmètre donné, l'élément de plaquage étant élastiquement déformable entre une configuration dite agrandie et une configuration dite de plaquage de la couche externe, dans laquelle l'élément de plaquage est configuré pour exercer une pression radiale sur la couche externe,
- des moyens de déplacement, suivant la direction axiale de l'ébauche, de l'élément de plaquage en configuration de plaquage.

Ce dispositif permet de mettre en oeuvre le procédé de mise en joint selon l'invention. Les commentaires mentionnés précédemment au sujet du procédé s'appliquent au sujet du dispositif.

Le dispositif peut en outre comporter l'une ou plusieurs des caractéristiques suivantes, prises seules ou en combinaison.

Le dispositif comporte en outre des moyens de déformation de l'élément de plaquage, comprenant par exemple des vérins pneumatiques, agencés pour le faire passer de sa configuration de plaquage à la configuration agrandie.

Les moyens de déformation comprennent des vérins pneumatiques répartis autour de l'élément de plaquage, activant chacun une tige de vérin dont une extrémité est fixée à l'élément de plaquage, de façon à pouvoir agrandir le périmètre de l'élément de plaquage par élasticité. Ainsi les vérins permettent d'agrandir l'élément de plaquage par des tractions ponctuelles tout au long de son contour.

L'extrémité de la tige de chaque vérin comporte une cavité de réception de l'élément de plaquage, ayant une forme de retenue de l'élément de plaquage, laissant l'élément de plaquage libre en rotation dans la cavité. Ainsi, lorsque l'élément de plaquage est déplacé dans la direction axiale, il peut rouler sur la couche externe, évitant ainsi un glissement qui risquerait d'abîmer la couche externe. Selon un mode de réalisation, l'élément de plaquage est monté dans la cavité par enfilage.

L'élément de plaquage est un ressort hélicoïdal d'axe circulaire. On notera que l'axe du ressort hélicoïdal correspond à l'axe passant par le centre des spires, il est également appelé fibre neutre ou axe d'enroulement. Selon un exemple, le ressort est monté rotatif autour de son axe. Par ailleurs, toujours selon un exemple, le ressort est abouté au moyen d'un manchon.

Les moyens de déformation sont portés par un cadre support monté déplaçable dans la direction axiale d'un tambour rotatif sous l'action des moyens de déplacement.

L'invention sera mieux comprise à la lecture de la description qui va suivre, donnée uniquement à titre d'exemple et faite en se référant aux dessins dans lesquels ;
- la figure 1 est une vue schématique de côté d'un dispositif de mise en joint, selon un mode de réalisation, et
- la figure 2 est une vue en coupe schématique du dispositif de la figure 1, illustrant le procédé de mise en joint.

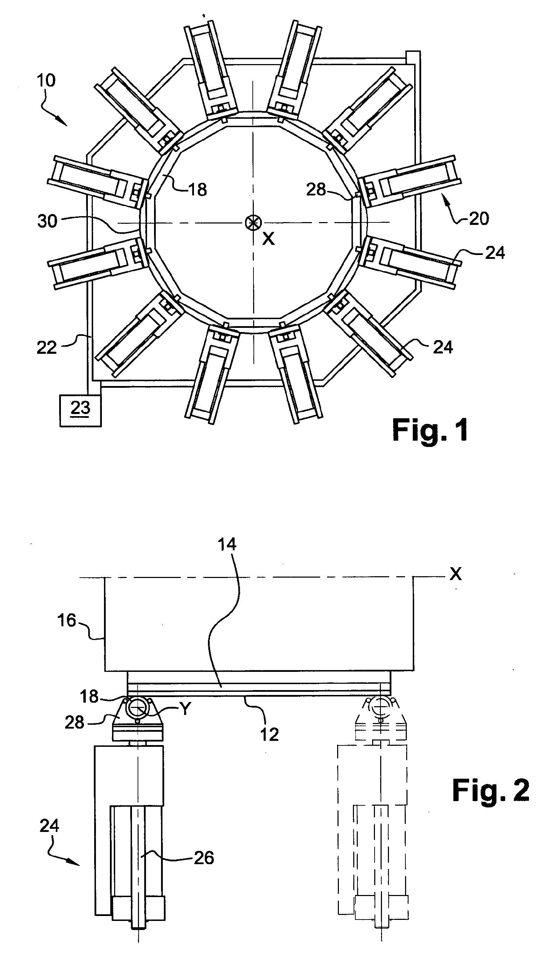

On a représenté sur la figure 1 une partie d'un dispositif 10 de mise en joint pour la réalisation d'une ébauche crue de pneumatique. Le dispositif 10 est installé dans une usine de fabrication de pneumatiques pour véhicules de tourisme ou pour véhicules industriels. Le dispositif 10 permet de mettre en joint (ou plaquer) une couche externe 12 de matière, en l'occurrence une couche de gomme, sur une couche de base 14, par exemple une couche inférieure de gomme, une couche de renfort, plusieurs couches de gomme superposées et/ou juxtaposées et/ou un support.

Les couches 12, 14, ainsi que d'autres couches, sont assemblées les unes aux autres de façon à réaliser une ébauche crue de pneumatique, ayant un axe de révolution X, confondu avec l'axe de révolution d'un tambour cylindrique 16 sur lequel sont superposées les couches.

Le dispositif 10 comprend un élément de plaquage 18, des moyens 20 de déformation de l'élément 18, portés par un cadre support 22, et des moyens 23 de déplacement de l'élément 18.

L'élément de plaquage 18 est un élément élastiquement déformable délimitant un contour fermé ayant un périmètre. Plus précisément, l'élément de plaquage 18 est de forme circulaire, du moins lorsqu'il est en configuration de repos, son axe de révolution étant confondu avec l'axe X. Dans cet exemple, l'élément 18 est un ressort hélicoïdal d'axe circulaire Y, visible sur la figure 2. Le ressort 18 est abouté au moyen d'un manchon, c'est-à-dire que l'on a réunit deux extrémités d'un ressort hélicoïdal linéaire pour former un cercle.

L'élément de plaquage 18 est configuré pour entourer la couche externe 12 lorsqu'elle est appliquée sur la couche de base 14. Il est élastiquement déformable entre notamment trois configurations, à savoir une configuration de repos, une configuration de plaquage de la couche externe 12, dans laquelle l'élément de plaquage exerce une pression radiale sur la couche externe 12, comme illustré sur la figure 2, et une configuration agrandie, illustrée sur la figure 1.

La configuration de repos correspond à la configuration dans laquelle l'énergie de rappel de l'élément 18 est nulle. Dans cette configuration, le périmètre du contour de l'élément 18 est inférieur au périmètre dans la configuration de plaquage, lui-même inférieur au périmètre dans la configuration agrandie. En d'autres termes, le diamètre de l'élément 18 est augmenté entre la configuration de repos et la configuration de plaquage, puis entre la configuration de plaquage et la configuration agrandie. Par ailleurs, le périmètre du contour de l'élément 18, lorsqu'il est en configuration de repos, est inférieur au périmètre extérieur de la couche de base 14, de manière que l'élément de plaquage 18 en configuration de plaquage exerce une force de compression de la couche externe 12 contre la couche de base 14.

Les moyens 20 sont des moyens de déformation de l'élément de plaquage 18, agencés pour le faire passer de sa configuration de plaquage à la configuration agrandie. Les moyens 20 comprennent plusieurs vérins pneumatiques 24, uniformément répartis autour de l'élément de plaquage 18, activant chacun une tige de vérin 26 dont une extrémité 28 est fixée à l'élément de plaquage 18, de façon à pouvoir agrandir le périmètre de l'élément de plaquage par élasticité. Plus précisément, l'extrémité 28 de la tige 26 de chaque vérin 24 comporte une cavité 28 de réception de l'élément de plaquage 18, ayant une forme de retenue de l'élément de plaquage, laissant l'élément de plaquage libre en rotation dans la cavité 28. En d'autres termes, lorsque l'élément 18 est dans la cavité 28, il peut tourner sur lui-même, autour de son axe Y. Dans cet exemple, la cavité 28 a une section en C, l'élément 18 étant monté dans la cavité 28 par enfilage. Toujours dans cet exemple, les moyens 20 comprennent douze vérins 24.

Le cadre support 22 porte l'ensemble des vérins 24. Plus précisément, le cadre 22 délimite une ouverture circulaire 30, destinée à être introduite autour du tambour 16, et sur laquelle sont montés les vérins 24. Le cadre support 22 est par ailleurs monté déplaçable dans la direction axiale X du tambour rotatif 16 sous l'action des moyens de déplacement 23.

Les moyens de déplacement 23 permettent de déplacer l'élément de plaquage 18 en configuration de plaquage, suivant la direction X, de façon à parcourir toute la longueur axiale du tambour 16. De préférence, les moyens de déplacement 23 et les moyens de déformation 20 sont commandés automatiquement.

Le procédé de mise en joint au moyen du dispositif 10 va à présent être décrit. Ce procédé est mis en oeuvre au cours d'un procédé de fabrication d'une ébauche crue du pneumatique, elle-même mise en oeuvre au cours d'un procédé de fabrication du pneumatique.

Le procédé de mise en joint comprend tout d'abord une étape d'application de la couche externe 12 sur la couche de base 14, suivie d'une étape de mise en joint de la couche externe 12 contre la couche de base 14. Pour mettre en oeuvre cette étape de mise en joint, l'élément de plaquage 18 est rapporté autour de la couche externe 12. Par exemple, il est rapporté de la façon suivante. L'élément 18 est initialement disposé sur le côté du tambour 16, autour du tambour et à côté des couches 14, 12, du fait qu'il a servi préalablement à la mise en joint d'une couche inférieure telle que la couche 14. Il passe ensuite en configuration agrandie sous l'action des moyens de déformation 20, de façon à pouvoir être déplacé autour de la couche externe 12, par déplacement dans la direction axiale X.

On effectue ensuite la mise en joint de la couche 12, en faisant tout d'abord passer l'élément de plaquage 18 de la configuration agrandie à la configuration de plaquage. Ainsi, l'élément 18 exerce une pression radiale tout autour de la couche 12.

On passe ensuite à une étape de déplacement, suivant la direction axiale X, de l'élément de plaquage 18 en configuration de plaquage, grâce aux moyens 23, de façon à chasser l'air présent entre les couches, comme illustré en pointillés sur la figure 2. Une fois que l'élément 18 a été déplacé sur toute la longueur axiale du tambour 16, la couche 12 est appliquée contre la couche 14, l'air occlus entre les deux couche a été évacué par les extrémités axiales des couches et la mise en joint entre les deux couches est assurée de façon satisfaisante.

On peut alors laisser l'élément de plaquage 18 sur le côté autour du tambour 16, à côté des couches 14, 12, de façon à dégager la couche 12 et libérer l'espace pour appliquer éventuellement une nouvelle couche. Cette nouvelle couche pourra par la suite être mise en joint au moyen de l'élément 18, lequel pourra être rapporté autour de la nouvelle couche par action des moyens de déformation 20.

On comprend que l'élément de plaquage 18 permet de diminuer le temps nécessaire à la mise en joint des couches et ainsi de diminuer le temps d'un cycle de fabrication de pneumatique. En effet, seul un déplacement dans la direction axiale du tambour X est nécessaire et il n'est donc pas obligatoire d'effectuer plusieurs rotations du tambour 16 pour réaliser cette mise en joint.

On comprend par ailleurs que l'on peut utiliser un même élément de plaquage 18 pour la mise en joint de différentes couches du procédé de fabrication, sans avoir forcément à le modifier ou à modifier les paramètres de fonctionnement, ce qui est particulièrement économique.

On notera enfin que l'invention n'est pas limitée au mode de réalisation précédemment décrit. En particulier, lorsque l'élément de plaquage 18 est en configuration de plaquage, les moyens de déformation 20 peuvent être commandés de façon à augmenter ou diminuer la pression exercée sur la couche externe 12. Par exemple, on peut prévoir des moyens de commande de la course de déplacement des tiges de vérins 26 en fonction du nombre de couches déjà superposées sur le tambour 16.

Par ailleurs, on peut utiliser deux éléments de plaquage 18, chacun étant déplacé suivant la direction axiale X dans des directions opposées à partir du plan équatorial de l'ébauche de pneumatique.

## Revendications

1. Procédé de mise en joint d'une couche externe (12) de matière sur une couche de base (14) pour la réalisation d'une ébauche crue de pneumatique, l'ébauche présentant un axe de révolution (X), le procédé comportant une étape d'application de la couche externe (12) sur la couche de base (14), suivie d'une étape de mise en joint de la couche externe (12) contre la couche de base (14), **caractérisé en ce que** l'étape de mise en joint se fait au moyen d'un élément de plaquage (18) entourant la couche externe (12) et élastiquement déformable entre une configuration dite agrandie et une configuration dite de plaquage de la couche externe (12), dans laquelle l'élément de plaquage (18) exerce une pression radiale sur la couche externe, l'étape de mise enjoint comprenant les étapes suivantes :
- passage de l'élément de plaquage (18) de la configuration agrandie à la configuration de plaquage de la couche,
- déplacement, suivant la direction axiale (X) de l'ébauche, de l'élément de plaquage (18) en configuration de plaquage.

2. Procédé selon la revendication précédente, dans lequel l'élément de plaquage (18) délimite un contour fermé ayant un périmètre donné et est configuré de telle sorte que le périmètre de son contour, lorsqu'il est en configuration de repos, est inférieur au périmètre extérieur de la couche de base (14), de manière que l'élément de plaquage (18) en configuration de plaquage exerce une force de compression radiale de la couche externe contre la couche de base.

3. Procédé selon l'une quelconque des revendications précédentes, comprenant une étape de passage de l'élément de plaquage (18) de la configuration de plaquage à la configuration agrandie, sous l'action de moyens (20) de déformation de l'élément de plaquage, comprenant des vérins pneumatiques (24).

4. Procédé selon la revendication précédente, au cours duquel lorsque l'élément de plaquage (18) est en configuration de plaquage, les moyens de déformation (20) sont commandés de façon à augmenter ou diminuer la pression exercée sur la couche externe (12).

5. Procédé selon l'une quelconque des revendications précédentes, au cours duquel on utilise deux éléments de plaquage (18), chacun étant déplacé suivant la direction axiale (X) dans des directions opposées à partir d'un plan équatorial de l'ébauche de pneumatique.

6. Procédé de fabrication d'un pneumatique comprenant un procédé de mise en joint selon l'une quelconque des revendications précédentes.

7. Dispositif (10) de mise en joint d'une couche externe (12) de matière sur une couche de base (14) pour la réalisation d'une ébauche crue de pneumatique, l'ébauche présentant un axe de révolution (X), **caractérisé en ce que** le dispositif comprend :
- un élément de plaquage (18) configuré pour entourer la couche externe (12) lorsqu'elle est appliquée sur la couche de base (14), délimitant un contour fermé ayant un périmètre donné, l'élément de plaquage (18) étant élastiquement déformable entre une configuration dite agrandie et une configuration dite de plaquage de la couche externe, dans laquelle l'élément de plaquage est configuré pour exercer une pression sur la couche externe,
- des moyens (23) de déplacement, suivant la direction axiale (X) de l'ébauche, de l'élément de plaquage (18) en configuration de plaquage.

8. Dispositif selon la revendication précédente, comportant en outre des moyens (20) de déformation de l'élément de plaquage (18), comprenant par exemple des vérins pneumatiques (24), agencés pour le faire passer de sa configuration de plaquage à la configuration agrandie.

9. Dispositif selon la revendication précédente, dans lequel les moyens de déformation comprennent des vérins pneumatiques (24) répartis autour de l'élément de plaquage (18), activant chacun une tige de vérin (26) dont une extrémité (28) est fixée à l'élément de plaquage (18), de façon à pouvoir agrandir le périmètre de l'élément de plaquage par élasticité.

10. Dispositif selon la revendication précédente, dans lequel l'extrémité de la tige de chaque vérin comporte une cavité (28) de réception de l'élément de plaquage (18), ayant une forme de retenue de l'élément de plaquage, laissant l'élément de plaquage libre en rotation dans la cavité (28).

11. Dispositif selon l'une quelconque des revendications précédentes, dans lequel l'élément de plaquage est un ressort hélicoïdal (18) d'axe circulaire (Y).

12. Dispositif selon l'une quelconque des revendications 8 à 11, dans lequel les moyens de déformation (20) sont portés par un cadre support (22) monté déplaçable dans la direction axiale (X) d'un tambour rotatif (16) sous l'action des moyens de déplacement (23).

## Patentansprüche

1. Verfahren zur Zusammenfügung einer äußeren Materialschicht (12) auf einer Basisschicht (14) für die Herstellung eines Reifenrohlings, wobei der Rohling eine Umdrehungsachse (X) aufweist, wobei das Verfahren einen Schritt des Aufbringens der äußeren Schicht (12) auf die Basisschicht (14), gefolgt von einem Schritt der Zusammenfügung der äußeren Schicht (12) an der Basisschicht (14) umfasst, **dadurch gekennzeichnet, dass** der Schritt der Zusammenfügung mit Hilfe eines Plattierelements (18), das die äußere Schicht (12) umgibt und zwischen einer so genannten vergrößerten Ausführung und einer so genannten Plattierausführung der äußeren Schicht (12) verformbar ist, erfolgt, wobei das Plattierelement (18) einen Radialdruck auf die äußere Schicht ausübt, wobei der Schritt der Zusammenfügung die folgenden Schritte umfasst:
- Übergang des Plattierelements (18) von der vergrößerten Ausführung in die Plattierausführung der Schicht,
- Verschieben des Plattierelements (18) in Plattierausführung entlang der Axialrichtung (X) des Rohlings.

2. Verfahren nach dem vorhergehenden Anspruch, bei dem das Plattierelement (18) eine geschlossene Kontur mit einem gegebenen Umfang begrenzt und derart ausgeführt ist, dass der Umfangs seiner Kontur, wenn es sich in Ruhestellung befindet, kleiner als der äußere Umfang der Basisschicht (14) ist, damit das Plattierelement (18) in Plattierausführung eine radiale Kompressionskraft der äußeren Schicht auf die Basisschicht ausübt.

3. Verfahren nach einem der vorhergehenden Ansprüche, umfassend einen Schritt des Übergangs des Plattierelements (18) von der Plattierausführung in die vergrößerte Ausführung unter der Wirkung von Mitteln (20) zur Verformung des Plattierelements, umfassend Druckluftzylinder (24).

4. Verfahren nach dem vorhergehenden Anspruch, während dem, wenn das Plattierelement (18) in Plattierausführung ist, die Verformungsmittel (20) derart gesteuert werden, dass sie den auf die äußere Schicht (12) ausgeübten Druck vergrößern oder verkleinern.

5. Verfahren nach einem der vorhergehenden Ansprüche, während dem zwei Plattierelemente (18) verwendet werden, wobei jedes entlang der Axialrichtung (X) in entgegengesetzte Richtungen von einer äquatorialen Ebene des Reifenrohlings verschoben wird.

6. Verfahren zur Herstellung eines Reifens, umfassend ein Zusammenfügungsverfahren nach einem der vorhergehenden Ansprüche.

7. Vorrichtung (10) zur Zusammenfügung einer äußeren Materialschicht (12) auf einer Basisschicht (14) für die Herstellung eines Reifenrohlings, wobei der Rohling eine Umdrehungsachse (X) aufweist, **dadurch gekennzeichnet, dass** die Vorrichtung umfasst:
- ein Plattierelement (18), das derart ausgeführt ist, dass es die äußere Schicht (12) umgibt, wenn sie auf der Basisschicht (14) aufgebracht wird, das eine geschlossene Kontur mit einem gegebenen Umfang begrenzt, wobei das Plattierelement (18) elastisch zwischen einer so genannten vergrößerten Ausführung und einer so genannten Plattierausführung der äußeren Schicht, in der das Plattierelement dazu ausgeführt ist, einen Druck auf die äußere Schicht auszuüben, verformbar ist,
- Mittel (23) zum Verschieben des Plattierelements (18) in Plattierausführung entlang der Axialrichtung (X) des Rohlings.

8. Vorrichtung nach dem vorhergehenden Anspruch, ferner umfassend Mittel (20) zum Verformen des Plattierelements (18), umfassend beispielsweise Druckluftzylinder (24), die derart angeordnet sind, dass sie es von seiner Plattierausführung in die vergrößerte Ausführung übergehen lassen.

9. Vorrichtung nach dem vorhergehenden Anspruch, bei der die Verformungsmittel Druckluftzylinder (24) umfassen, die um das Plattierelement (18) verteilt sind und jeweils eine Zylinderstange (26) aktivieren, deren eines Ende (28) am Plattierelement (18) befestigt ist, um den Umfang des Plattierelements durch Elastizität vergrößern zu können.

10. Vorrichtung nach dem vorhergehenden Anspruch, bei dem das Ende der Stange jedes Zylinders einen Hohlraum (28) für die Aufnahme des Plattierelements (18) umfasst, der die Form einer Halterung des Plattierelements hat und das Plattierelement in dem Hohlraum (28) drehfrei lässt.

11. Vorrichtung nach einem der vorhergehenden Ansprüche, bei der das Plattierelement eine Spiralfeder (18) mit kreisförmiger Achse (Y) ist.

12. Vorrichtung nach einem der Ansprüche 8 bis 11, bei der die Verformungsmittel (20) von einem Stützrahmen (22) getragen werden, der in Axialrichtung (X) einer drehbaren Trommel (16) unter der Wirkung der Verschiebemittel (23) verschiebbar montiert ist.

## Claims

1. Method for jointing an external layer (12) of material to a base layer (14) to produce a green tyre, the green tyre having an axis of revolution (X), the method comprising a step of applying the outer layer (12) to the base layer (14), followed by a step of jointing the outer layer (12) to the base layer (14), **characterized in that** the jointing step is done using a pressing element (18) surrounding the outer layer (12) and elastically deformable between a configuration called the enlarged configuration and a configuration called the outer-layer (12) pressing configuration, in which the pressing element (18) applies a radial pressure to the outer layer, the jointing step comprising the following steps:
- the passage of the pressing element (18) from the enlarged configuration to the layer-pressing configuration,
- the movement of the pressing element (18) in the pressing configuration, in the axial direction (X) of the green tyre.

2. Method according to the preceding claim, in which the pressing element (18) delimits a closed outline of a given perimeter and is configured in such a way that the perimeter of its outline, when it is in the rest configuration, is less than the external perimeter of the base layer (14) so that the pressing element (18) in the pressing configuration applies a radial compression force compressing the outer layer radially against the base layer.

3. Method according to either one of the preceding claims, comprising a step in which the pressing element (18) passes from the pressing configuration into the enlarged configuration under the action of deformation means (20), comprising pneumatic actuating cylinders (24) that deform the pressing element.

4. Method according to the preceding claim, during which when the pressing element (18) is in the pressing configuration, the deformation means (20) are operated in such a way as to increase or decrease the pressure applied to the outer layer (12).

5. Method according to any one of the preceding claims, during which use is made of two pressing elements (18), each being moved in the axial direction (X) in opposite directions from an equatorial plane of the green tyre.

6. Method of manufacturing a tyre comprising a jointing method according to any one of the preceding claims.

7. Device (10) for jointing an outer layer (12) of material to a base layer (14) to produce a green tyre, the green tyre having an axis of revolution (X), **characterized in that** the device comprises:
- a pressing element (18) configured to surround the outer layer (12) when it is applied to the base layer (14), delimiting a closed outline of a given perimeter, the pressing element (18) being elastically deformable between a configuration called the enlarged configuration and a configuration called the outer-layer pressing configuration, in which the pressing element is configured to apply pressure to the outer layer,
- movement means (23) for moving the pressing element (18) in the pressing configuration in the axial direction (X) of the green tyre.

8. Device according to the preceding claim, further comprising deformation means (20), for example comprising pneumatic actuating cylinders (24), for deforming the pressing element (18) and designed to cause it to pass from its pressing configuration into the enlarged configuration.

9. Device according to the preceding claim, in which the deformation means comprise pneumatic actuating cylinders (24) distributed around the pressing element (18) each activating an actuating cylinder rod (26) of which one end (28) is fixed to the pressing element (18) so as to be able to enlarge the perimeter of the pressing element through elasticity.

10. Device according to the preceding claim, in which the end of the rod of each actuating cylinder comprises a cavity (28) to house the pressing element (18), having a retaining shape for retention of the pressing element, leaving the pressing element free to rotate within the cavity (28).

11. Device according to any of one of the preceding claims, in which the pressing element is a helical spring (18) of circular axis (Y).

12. Device according to any one of Claims 8 to 11, in which the deformation means (20) are carried by a support frame (22) mounted such that it can move in the axial direction (X) of a rotary drum (16) under the action of the movement means (23).
